# EUROPEAN PATENT SPECIFICATION

(11) **EP 4 395 050 B1**
(45) Date of publication and mention of the grant of the patent: **09.12.2026**
(21) Application number: 22948992.7
(22) Date of filing: 30.09.2022
(51) Int. Cl.: H01M 50/533, H01M 50/536

(54) **BATTERY CELL, BATTERY, AND ELECTRIC DEVICE**
BATTERIEZELLE, BATTERIE UND ELEKTRISCHE VORRICHTUNG
ÉLÉMENT DE BATTERIE, BATTERIE ET DISPOSITIF ÉLECTRIQUE

(30) Priority: 27.06.2022 CN 202210734115
(43) Date of publication of application: 03.07.2024
(73) Proprietor: Jiangsu Contemporary Amperex Technology Limited, Liyang, Jiangsu 213300 (CN)
(72) Inventor: CHENG, Peng, hangzhou, Jiangsu 213300 (CN); ZHANG, Qi, hangzhou, Jiangsu 213300 (CN); XIE, Yuanyuan, hangzhou, Jiangsu 213300 (CN); LI, Jinsheng, hangzhou, Jiangsu 213300 (CN); WAN, Ke, hangzhou, Jiangsu 213300 (CN)
(74) Representative: Holt, Lucy Rose
(86) International application number: PCT/CN2022/123631
(87) International publication number: WO 2024/000906

(56) References cited:
- WO-A1-2004/066446
- CN-A- 109 103 408
- CN-A- 114 824 680
- CN-U- 207 233 789
- CN-U- 207 233 789
- CN-U- 207 676 989
- CN-U- 209 169 274
- CN-U- 216 648 533

## Description

### TECHNICAL FIELD

This application pertains to the field of battery technologies, and in particular relates to a battery cell, a battery, and an electric apparatus.

### BACKGROUND

With the increasing consumption of natural resources and damage to the environment, there is a growing interest in various fields in apparatuses that can store energy and efficiently utilize the stored energy. Battery cells are systems that can be combined with each other to utilize new renewable energy.

In the field of battery device technology, the connecting components are not tightly connected to the electrode terminals, which affects the energy density and cycle life of the battery.

### SUMMARY

The present invention provides for a battery cell as defined in independent claim 1. Dependent claims provide further advantageous embodiments. The present invention improves stability at the connecting components and increases the energy density and cycle life of the battery.

A battery cell is provided, including a housing, an electrode terminal, an electrode assembly, and a connecting component. The electrode terminal is provided on the housing, and the electrode assembly is accommodated in the housing. The connecting component is configured to connect the electrode terminal and the electrode assembly. The connecting component includes a first connecting portion for connecting the electrode terminal, where the first connecting portion includes a main body region and a thinned region, the thinned region having a smaller thickness than the main body region, and at least part of the thinned region being used for welding to the electrode terminal.

With the above structure, through provision of the thinned region, the thickness at the thinned region is reduced. This allows for a greater depth of fusion at the thinned region after the connecting component is welded to the electrode terminal, achieving a more stable connection between the connecting component and the electrode terminal, and preventing the connecting component from separating from the electrode terminal. The greater depth of fusion at the thinned region can also reduce the problem of incomplete welds between the connecting component and the electrode terminal, preventing an increase in contact resistance between the connecting component and the electrode terminal caused by incomplete welds. This in turn improves the consistency of the battery cell during the charging and discharging processes, improves the energy density and cycle life of the battery cell, and enhances the use safety of the battery cell.

In some embodiments of this application, at least part of the thinned region is used for welding to the electrode terminal and forming a first welding portion, and at least part of the main body region is used for welding to the electrode terminal and forming a second welding portion.

With the above structure, the provision of the first welding portion and the second welding portion allows both the main body region and thinned region on the first connecting portion to be welded to the electrode terminal, improving the stability of the connection between the connecting component and the electrode terminal.

In some embodiments of this application, the first welding portion and the second welding portion are connected as one entity.

With the above structure, the first welding portion and the second welding portion are connected as one entity, which can improve the overall integrity of the weld part, making the connection between the connecting component and the electrode terminal more stable.

In some embodiments of this application, the first connecting portion is laser welded to the electrode terminal.

With the above structure, the first connecting portion is laser welded to the electrode terminal, which can improve the depth of fusion of the thinned region during welding, and improve the strength of the connection between the first connecting portion and the electrode terminal.

In some embodiments of this application, the connecting component is further provided with a first concave portion, where the first concave portion is recessed from a surface of the connecting component away from the electrode terminal, and the thinned region corresponds to a bottom surface of the first concave portion.

With the above structure, provision of the first concave portion facilitates the formation of the thinned region and allows the thinned region to be integrally formed with the main body region, improving the integrity of the connecting component.

In some embodiments of this application, the connecting component is further provided with a second connecting portion, a convex portion, and a second concave portion, where the second connecting portion is configured to connect the electrode assembly; the convex portion protrudes from a surface of the connecting component towards the electrode terminal; and a position of the second concave portion corresponds to the convex portion in a thickness direction of the connecting component, and the second concave portion is recessed from the surface of the connecting component away from the electrode terminal and extends into the convex portion.

With the above structure, the provision of the second connecting portion allows the connecting component to connect the electrode assembly; the provision of the convex portion enables the connecting component to fit more closely to the electrode terminal, improving the welding stability of the connecting component and the electrode terminal; and the provision of the second concave portion makes the convex portion a cavity structure, and reduces the thickness at the convex portion, facilitating the welding of the convex portion to the electrode terminal.

In some embodiments of this application, a bottom surface of the second concave portion corresponding to the convex portion includes the first connecting portion.

With the above structure, provision of the first connecting portion on the convex portion allows the first connecting portion to protrude toward the electrode terminal, so that the first connecting portion fits on the surface of the electrode terminal, improving stability of the welding.

In some embodiments of this application, thickness of the connecting component is L1 and depth of the first concave portion is L2, satisfying 0 < L2/L1 ≤ 0.8.

With the above structure, limiting the thickness of the first concave portion can ensure an increased depth of fusion within the thinned region during welding. If the thickness of the thinned region is too small, the welding surface will be too far from the laser emission point, which significantly increases the defocus amount and decreases the welding strength, leading to a reduced depth of fusion. Additionally, limiting the thickness of the first concave portion can also prevent the thinned region from being too thin and melt off during welding.

In some embodiments of this application, in a plane perpendicular to the thickness direction, the area of the second concave portion is D1 and the area of the thinned region is D2, where 0.2 ≤ D2/D1 ≤ 0.4.

With the above structure, the areas of the second concave portion and the thinned region are limited to ensure an appropriate proportion of the thinned region within the second concave portion, thus improving the strength of the connection.

In some embodiments of this application, in a plane perpendicular to the thickness direction, the area of the thinned region is D2 and the area of the first connecting portion is D3, where 0.3 ≤ D2/D3 ≤ 0.5.

With the above structure, the areas of the first connecting portion and the thinned region are limited to ensure an appropriate proportion of the thinned region within the first connecting portion, thus improving the strength of the connection. This can also prevent the thinned region from taking up an excessively large proportion, thus avoiding a decrease in the mechanical strength and current-carrying capacity at the first connecting portion of the connecting component.

In some embodiments of this application, in a plane perpendicular to the thickness direction, the thinned region is circular.

With the above structure, the thinned region is designed as circular so that the junction between the thinned region and the main body region is curved, which facilitates the dispersion of the force on the first connecting portion to the thinned region and the main body region, thus improving the strength of the junction between the main body region and the thinned region.

According to a second aspect of the embodiments of this application, a battery is provided, including the foregoing battery cell.

According to a third aspect of the embodiments of this application, an electric apparatus is provided, including the foregoing battery cell for supplying electrical energy.

Compared with the prior art, in the battery cell, battery, and electric apparatus according to the embodiments of this application, the thinned region is provided so that the thickness at the thinned region is reduced. This allows for a greater depth of fusion at the thinned region after the connecting component is welded to the electrode terminal, achieving a more stable connection between the connecting component and the electrode terminal, and preventing the connecting component from separating from the electrode terminal. The greater depth of fusion at the thinned region can also reduce the problem of incomplete welds between the connecting component and the electrode terminal, preventing an increase in contact resistance between the connecting component and the electrode terminal caused by incomplete welds. This in turn improves the consistency of the battery cell during the charging and discharging processes, improves the energy density and cycle life of the battery cell, and enhances the use safety of the battery cell.

### BRIEF DESCRIPTION OF DRAWINGS

The following describes features, advantages, and technical effects of the example embodiments of this application with reference to the accompanying drawings.
FIG. 1 is a schematic structural diagram of a vehicle according to some embodiments of this application.
FIG. 2 is a schematic structural diagram of a battery according to some embodiments of this application;
FIG. 3 is a schematic structural diagram of a battery cell according to some embodiments of this application;
FIG. 4 is a schematic structural diagram of a connecting component according to some embodiments of this application;
FIG. 5 is a schematic cross-sectional view of a connecting component according to some embodiments of this application;
FIG. 6 is an enlarged schematic diagram of a first connecting portion in FIG. 5;
FIG. 7 is a schematic structural diagram of a battery cell according to some embodiments of this application from another perspective;
FIG. 8 is a schematic cross-sectional view along A-A in FIG. 7;
FIG. 9 is an enlarged schematic diagram of position P1 in FIG. 8;
FIG. 10 is a schematic structural diagram of a second concave portion according to some embodiments of this application; and
FIG. 11 is a schematic structural diagram of a second concave portion according to some other embodiments of this application.

In the accompanying drawings:
1000. vehicle; 100. battery; 200. controller; 300. motor; 110. box; 111. first box portion; 112. second box portion; 120. housing; 121. end cap; 122. shell; 123. electrode terminal; 124. terminal plate; 125. fixing block; 130. electrode assembly; 140. connecting component;
10. first connecting portion; 101. thinned region; 102. main body region; 103. first welding portion; 104. second welding portion; 20. second connecting portion; 1. first concave portion; 2. convex portion; and 3. second concave portion.

In the accompanying drawings, the figures are not necessarily drawn to scale.

### DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

The orientation terms appearing in the following description all are directions shown in the figures and do not limit the specific structure of the application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

In the development of battery technology, multiple design factors need to be considered, such as energy density, cycle life, and battery safety. These factors have become obstacles that hinder the further promotion of batteries.

The inventors have noticed that the welding process between the connecting component and the electrode terminal is greatly affected by process variations, resulting in the problem of incomplete welds between the connecting component and the electrode terminal, such as weak or missing welding. The problem of incomplete welds increases the contact resistance between the connecting component and the electrode terminal and decreases the battery consistency during charging and discharging processes, thus affecting the energy density, cycle life, and use safety of the battery.

To alleviate the incomplete weld problem of the battery, the inventors have found that the structure of the portion of the connecting component on which the electrode terminal is welded can be adjusted to increase the depth of fusion during welding of the connecting component to the electrode terminal without adjusting the welding conditions. This not only enhances the connection stability and welding strength after the welding, but also promotes the connection between the connecting component and the electrode terminal and reduces the occurrence of missing welds, thus improving the energy density, cycle life, and use safety of the battery.

Based on the above considerations, the inventors of this application have designed a battery cell, a battery, and an electric apparatus after in-depth research.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, or an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

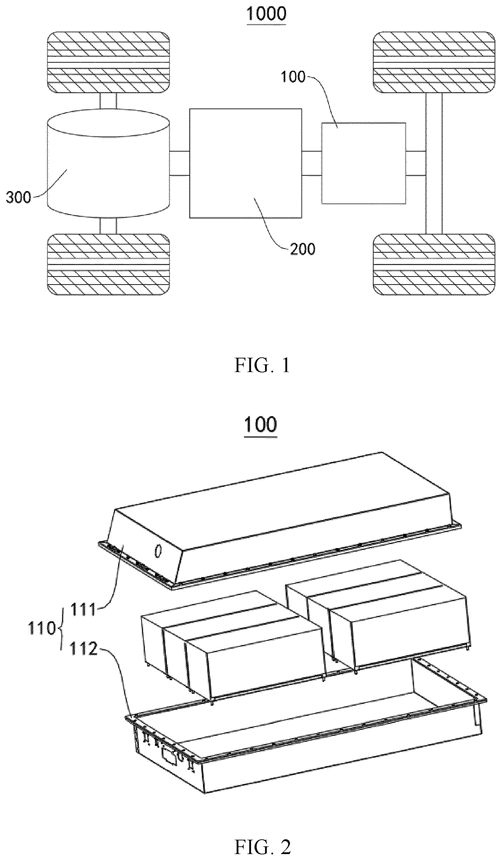

As shown in FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

The battery mentioned in the embodiments of this application is a single physical module that includes one or more battery cells for providing a higher voltage and capacity. For example, the battery mentioned in this application may include a battery module, a battery pack, or the like.

As shown in FIG. 2, FIG. 2 is a schematic structural diagram of a battery 100 according to some embodiments of this application. In some embodiments of this application, the battery 100 includes a box 110. The box 110 may include a first box portion 111 and a second box portion 112 that are connected to each other, and a plurality of battery cells are connected in parallel, series, or series-parallel, and then put into the space formed after the first box portion 111 and the second box portion 112 are connected. The shapes of the first box portion 111 and the second box portion 112 may be determined based on the shape of the plurality of battery cells combined. The battery cell may be cylindrical, flat, cuboid, or of other shapes, which is not limited in the embodiments of this application. In terms of packaging method, battery cells include but are not limited to cylindrical cell, prismatic cell, and pouch cell. The type of battery cells is not specifically limited in the embodiments of this application either. The battery 100 may further include other structures, for example, a busbar for implementing electrical connections between the plurality of battery cells. Such structures are not described herein.

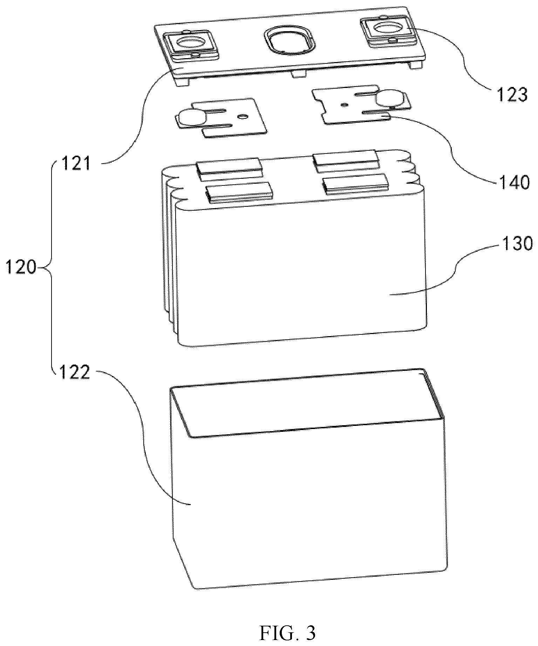

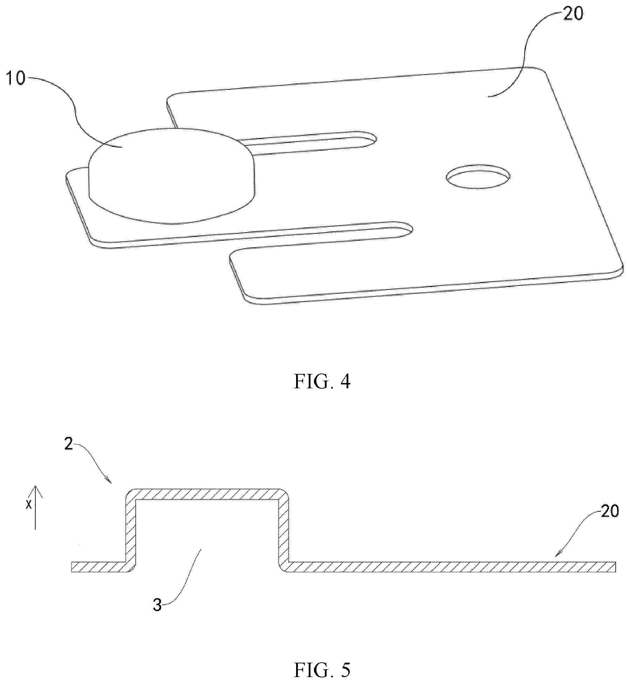

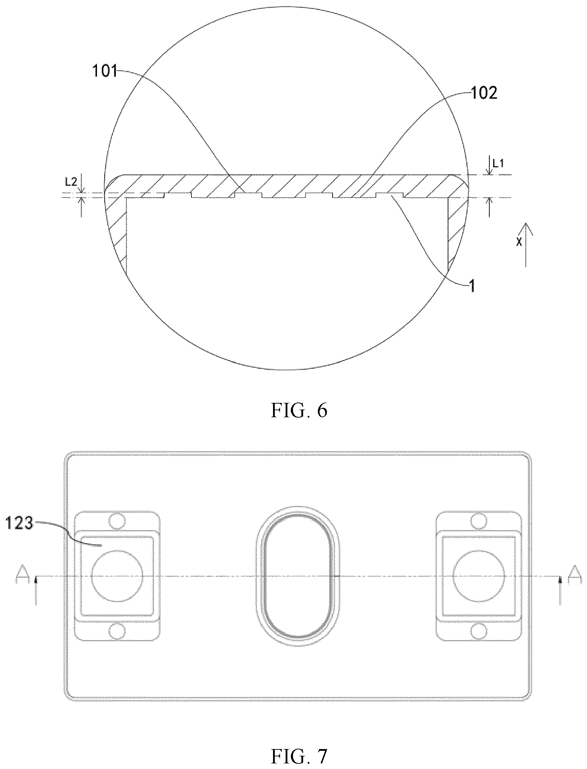

As shown in FIG. 3 to FIG. 6, FIG. 3 is a schematic structural diagram of a battery cell according to some embodiments of this application, FIG. 4 is a schematic structural diagram of a connecting component 140 according to some embodiments of this application, FIG. 5 is a schematic cross-sectional view of a connecting component 140 according to some embodiments of this application, and FIG. 6 is an enlarged schematic diagram of a first connecting portion 10 in FIG. 5A battery cell is provided, including a housing 120, an electrode terminal 123, an electrode assembly 130, and a connecting component 140. The electrode terminal 123 is provided on the housing 120, and the electrode assembly 130 is accommodated in the housing 120. The connecting component 140 is configured to connect the electrode terminal 123 and the electrode assembly 130. The connecting component 140 includes a first connecting portion 10 for connecting the electrode terminal 123. The first connecting portion 10 includes a main body region 102 and a thinned region 101, the thinned region 101 having a smaller thickness than the main body region 102, and at least part of the thinned region 101 being used for welding to the electrode terminal 123.

The housing 120 is an assembly configured to form an internal environment of the battery cell, where the formed internal environment can be used to accommodate the electrode assembly 130, an electrolyte (not shown in the figure), and other components. The housing 120 may be in a variety of structural forms, such as rectangular and cylindrical. For example, the shape of the housing 120 may be determined based on a specific shape of the electrode assembly 130. The housing 120 may be made of various materials, such as copper, iron, aluminum, stainless steel, aluminum alloy, and plastic, and the materials are not particularly limited in the embodiments of this application.

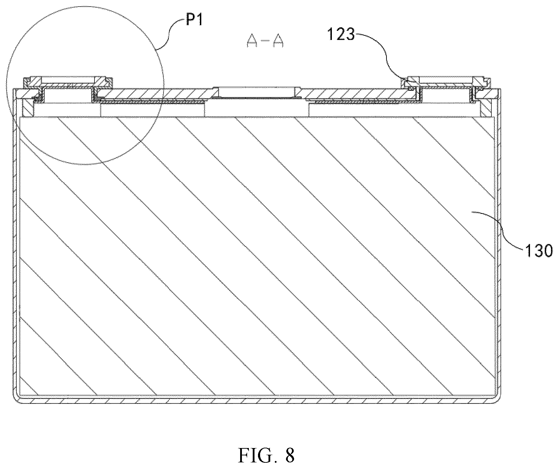

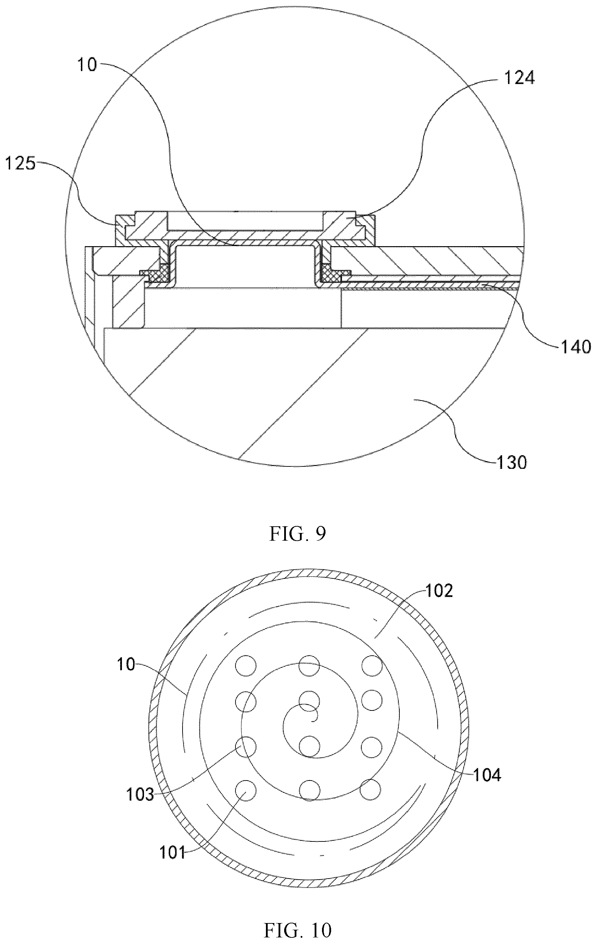

Referring to FIG. 7 to FIG. 9, FIG. 7 is a schematic structural diagram of a battery cell according to some embodiments of this application from another perspective. FIG. 8 is a schematic cross-sectional view along A-A in FIG. 7. FIG. 9 is an enlarged schematic diagram of position P1 in FIG. 8. The electrode terminal 123 is configured to be electrically connected to the connecting component 140 and further to the electrode assembly 130, for the power to be led out from or led into the battery cell. For example, the electrode terminal 123 may be provided as a pole, where one end of the pole post is provided inside the housing 120 and connected to the connecting component 140, and the other end is provided outside the housing 120. For example, the electrode terminal 123 may be provided as a terminal plate 124, the terminal plate 124 is provided outside the housing 120, and the connecting component 140 is connected to a bottom end of the terminal plate 124.

The connecting component 140 is configured to implement an electrical connection between the electrode terminal 123 and the electrode assembly 130, and the connecting component 140 may be an adapter sheet.

The electrode assembly 130 is a component in which electrochemical reactions take place in the battery cell. For example, the electrode assembly 130 is mainly formed by winding or stacking a positive electrode plate and a negative electrode plate, and a separator is generally disposed between the positive electrode plate and the negative electrode plate. Parts of the positive electrode plate and the negative electrode plate that have active substances constitute a body portion of the electrode assembly 130, while parts of the positive electrode plate and the negative electrode plate that have no active substances separately constitute a tab. In a charging and discharging process of the battery, a positive electrode active substance and a negative electrode active substance react with the electrolyte, and tabs are connected to the electrode terminals 123 via the connecting component 140 to form a current loop.

Through provision of the thinned region 101, the thickness at the thinned region 101 is reduced. This allows for a greater depth of fusion at the thinned region 101 after the connecting component 140 is welded to the electrode terminal 123, achieving a more stable connection between the connecting component 140 and the electrode terminal 123, and preventing the connecting component 140 from separating from the electrode terminal 123. The greater depth of fusion at the thinned region 101 can also reduce the problem of incomplete welds between the connecting component 140 and the electrode terminal 123, preventing an increase in contact resistance between the connecting component 140 and the electrode terminal 123 caused by incomplete welds. This in turn improves the consistency of the battery cell during the charging and discharging processes, improves the energy density and cycle life of the battery cell, and enhances the use safety of the battery cell.

Optionally, the housing 120 may include a shell 122 and an end cap 121, where the shell 122 is a hollow structure with an opening on one side, and the end cap 121 covers the opening of the shell 122 to form hermetical connection, so as to form a sealed space for accommodating the electrode assembly 130 and the electrolyte. The electrode terminal 123 is provided on the end cap 121. The electrode terminal 123 may include a positive electrode terminal 123 and a negative electrode terminal 123. Both the positive electrode terminal 123 and the negative electrode terminal 123 are configured to be electrically connected to the electrode assembly 130 to output electrical energy generated by the electrode assembly 130.

Optionally, the housing 120 may alternatively be of other structures. For example, the housing 120 includes a shell 122 and two end caps 121, where the shell 122 is a hollow structure with openings on two opposite sides, and one end cap 121 covers one opening of the shell 122 to form hermetical connection, so as to form a sealed space for accommodating the electrode assembly 130 and the electrolyte. In this structure, the positive electrode terminal 123 and the negative electrode terminal 123 may be mounted on a same end cap 121 or on different end caps 121.

Optionally, one or more electrode assemblies 130 may be contained within the housing 120.

Optionally, the main body region 102 and the thinned region 101 may be integrally formed or may be welded or glued together. When integrally formed, the thinned region 101 may be obtained by thinning part of the region on the first connecting portion 10. Optionally, one or more thinned regions 101 may be provided. Optionally, the thinned region 101 may be of various shapes, such as square and circular.

As shown in FIG. 10, FIG. 10 is a schematic structural diagram of a second concave portion 3 according to some embodiments of this application. In some embodiments of this application, at least part of the thinned region 101 is used for welding to the electrode terminal 123 and forming a first welding portion 103, and at least part of the main body region 102 is used for welding to the electrode terminal 123 and forming a second welding portion 104. The provision of the first welding portion 103 and the second welding portion 104 allows both the main body region 102 and thinned region 101 on the first connecting portion 10 to be welded to the electrode terminal 123, improving the stability of the connection between the connecting component 140 and the electrode terminal 123.

The first welding portion 103 is a weld joint formed after the thinned region 101 is welded to the electrode terminal 123, and the second welding portion 104 is a weld joint formed after the main body region 102 is welded to the electrode terminal 123.

In some embodiments of this application, the first welding portion 103 and the second welding portion 104 are connected as one entity. The first welding portion 103 and the second welding portion 104 are connected as one entity, which can improve the overall integrity of the weld part, making the connection between the connecting component 140 and the electrode terminal 123 more stable.

The first welding portion 103 and the second welding portion 104 being connected as one entity means that after welding, the first welding portion 103 and the second welding portion 104 have overlapping welding tracks or are integrally formed.

Optionally, after welding, the resulting welding track may be in the form of a ring, a spiral line, or a grid.

In some embodiments of this application, the first connecting portion 10 is laser welded to the electrode terminal 123. The first connecting portion 10 is laser welded to the electrode terminal 123, which can increase the depth of fusion of the thinned region 101 during welding, and improve the strength of the connection between the first connecting portion 10 and the electrode terminal 123.

As shown in FIG. 6, in some embodiments of this application, the connecting component 140 is further provided with a first concave portion 1, where the first concave portion 1 is recessed from a surface of the connecting component 140 away from the electrode terminal 123, and the thinned region 101 corresponds to a bottom surface of the first concave portion 1. Provision of the first concave portion 1 facilitates the formation of the thinned region 101 and allows the thinned region 101 to be integrally formed with the main body region 102, improving the integrity of the connecting component 140.

Optionally, the first concave portion 1 may be a groove formed by milling on the surface of the first connecting portion 10 away from the electrode terminal 123. Optionally, in a plane perpendicular to a thickness direction of the first connecting portion 10, the thinned region 101 coincides with the bottom surface coverage of the first concave portion 1.

As shown in FIG. 5 and FIG. 6, in some embodiments of this application, the connecting component 140 is further provided with a second connecting portion 20, a convex portion 2, and a second concave portion 3. The second connecting portion 20 is configured to connect the electrode assembly 130; the convex portion 2 protrudes from a surface of the connecting component 140 towards the electrode terminal 123; and a position of the second concave portion 3 corresponds to the convex portion 2 in the thickness direction (the x-axis direction in FIGs. 5 and 6) of the connecting component 140, and the second concave portion 3 is recessed from the surface of the connecting component 140 away from the electrode terminal 123 and extends into the convex portion 2.

The provision of the second connecting portion 20 allows the connecting component 140 to connect the electrode assembly 130; the provision of the convex portion 2 enables the connecting component 140 to fit more closely to the electrode terminal 123, improving the welding stability of the connecting component 140 and the electrode terminal 123; and the provision of the second concave portion 3 makes the convex portion 2 a cavity structure, and reduces the thickness at the convex portion 2, facilitating the welding of the convex portion 2 to the electrode terminal 123.

Optionally, the first connecting portion 10 and the second connecting portion 20 may be disposed on two sides of the connecting component 140. Optionally, the housing 120 is further provided with an electrode lead-out hole for the electrode terminal 123 to be connected from the inside of the housing 120 to the outside of the housing 120 to conduct the electrical energy generated on the electrode assembly 130. For example, the electrode terminal 123 may further include a fixing block 125. Part of the fixing block 125 is provided at the top of the electrode lead-out hole, so that a side of the electrode lead-out hole close to the connecting component 140 is vacant to form an accommodating portion. Another part of the fixing block 125 is provided at the outside of the housing 120, the terminal plate 124 is provided within the fixing block 125, the convex portion 2 matches the accommodating portion, and the terminal plate 124 and the connecting component 140 are welded to the accommodating portion via the convex portion 2.

Optionally, the convex portion 2 may be integrally formed with the connecting component 140, and the second concave portion 3 may be obtained by milling the connecting component 140. Optionally, the convex portion 2 may be formed on the connection by stamping, and the second concave portion 3 is a groove formed when the convex portion 2 is formed by stamping. Optionally, the shape and structure of the convex portion 2 may be determined based on the shape and structure of the accommodating portion, such as a cylindrical protrusion or a square protrusion. Optionally, the shape and structure of the second concave portion 3 may be determined based on the shape and structure of the convex portion 2, such as a cylindrical groove or a square groove.

As shown in FIG. 5, in some embodiments of this application, a bottom surface of the second concave portion 3 corresponding to the convex portion 2 includes a first connecting portion 10. Provision of the first connecting portion 10 on the convex portion 2 allows the first connecting portion 10 to protrude toward the electrode terminal 123, so that the first connecting portion 10 fits on the surface of the electrode terminal 123, improving stability of the welding.

As shown in FIG. 6, in some embodiments of this application, thickness of the connecting component 140 is L1 and depth of the first concave portion 1 is L2, satisfying 0 < L2/L1 ≤ 0.8. Limiting the thickness of the first concave portion 1 can ensure an increased depth of fusion within the thinned region 101 during welding. If the thickness of the thinned region 101 is too small, the welding surface will be too far from the laser emission point, which significantly increases the defocus amount and decreases the welding strength, leading to a reduced depth of fusion. Additionally, limiting the thickness of the first concave portion 1 can also prevent the thinned region 101 from being too thin and melt off during welding.

Optionally, the thickness of the connecting component 140 is L1 and the depth of the first concave portion 1 is L2, satisfying 0.2 ≤ L2/L1 ≤ 0.6. Optionally, the thickness of the connecting component 140 is L1 and the depth of the first concave portion 1 is L2, satisfying L2/L1 = 0.4. Optionally, the thickness of the connecting component 140 is L1 and the depth of the first concave portion 1 is L2, satisfying L2/L1 = 0.5.

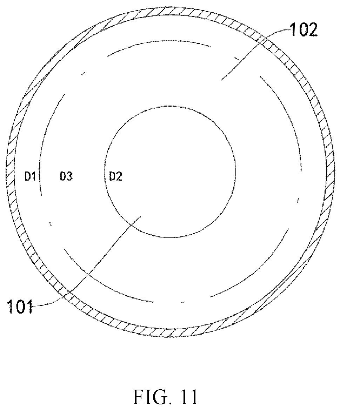

As shown in FIG. 11, FIG. 11 is a schematic structural diagram of a second concave portion 3 according to some other embodiments of this application. In some embodiments of this application, in a plane perpendicular to the thickness direction, the area of the second concave portion 3 is D1 and the area of the thinned region 101 is D2, where 0.2 ≤ D2/D1 ≤ 0.4. The areas of the second concave portion 3 and the thinned region 101 are limited to ensure an appropriate proportion of the thinned region 101 within the second concave portion 3, thus improving the strength of the connection.

Optionally, the area of the second concave portion 3 is D1 and the area of the thinned region 101 is D2, where 0.2 ≤ D2/D1 ≤ 0.3.

As shown in FIG. 11, in some embodiments of this application, in a plane perpendicular to the thickness direction, the area of the thinned region 101 is D2 and the area of the first connecting portion 10 is D3, where 0.3 ≤ D2/D3 ≤ 0.5. The areas of the first connecting portion 10 and the thinned region 101 are limited to ensure an appropriate proportion of the thinned region 101 within the first connecting portion 10, thus improving the strength of the connection. This can also prevent the thinned region 101 from taking up an excessively large proportion, thus avoiding a decrease in the mechanical strength and current-carrying capacity at the first connecting portion 10 of the connecting component 140.

Optionally, the area of the thinned region 101 is D2 and the area of the first connecting portion 10 is D3, where 0.3 ≤ D2/D3 ≤ 0.4.

As shown in FIG. 10 and FIG. 11, in some embodiments of this application, in a plane perpendicular to the thickness direction, the thinned region 101 is circular. The thinned region 101 is designed as circular so that the junction between the thinned region 101 and the main body region 102 is curved, which facilitates the dispersion of the force on the first connecting portion 10 to the thinned region 101 and the main body region 102, thus improving the strength of the junction between the main body region 102 and the thinned region 101.

In some embodiments of this application, a battery is provided, including the foregoing battery cell.

In some embodiments of this application, an electric apparatus is provided, including the foregoing battery cell for supplying electrical energy.

In some embodiments of this application, a battery cell is provided, including a housing 120, an electrode terminal 123, an electrode assembly 130, and a connecting component 140. The electrode terminal 123 is provided on the housing 120, and the electrode assembly 130 is accommodated in the housing 120. The connecting component 140 is configured to connect the electrode terminal 123 and the electrode assembly 130. The connecting component 140 includes a first connecting portion 10 for connecting the electrode terminal 123. The first connecting portion 10 includes a main body region 102 and a thinned region 101, the thinned region 101 having a smaller thickness than the main body region 102, and at least part of the thinned region 101 being used for welding to the electrode terminal 123. At least part of the thinned region 101 is used for welding to the electrode terminal 123 and forming a first welding portion 103, and at least part of the main body region 102 is used for welding to the electrode terminal 123 and forming a second welding portion 104. The first welding portion 103 and the second welding portion 104 are connected as one entity, and the first connecting portion 10 is laser welded to the electrode terminal 123. The connecting component 140 is further provided with a first concave portion 1, where the first concave portion 1 is recessed from a surface of the connecting component 140 away from the electrode terminal 123, and the thinned region 101 corresponds to a bottom surface of the first concave portion 1. The connecting component 140 is further provided with a second connecting portion 20, a convex portion 2, and a second concave portion 3. The second connecting portion 20 is configured to connect the electrode assembly 130; the convex portion 2 protrudes from a surface of the connecting component 140 towards the electrode terminal 123; and a position of the second concave portion 3 corresponds to the convex portion 2 in the thickness direction of the connecting component 140, and the second concave portion 3 is recessed from the surface of the connecting component 140 away from the electrode terminal 123 and extends into the convex portion 2. The thickness of the connecting component 140 is L1 and the depth of the first concave portion 1 is L2, satisfying 0 < L2/L1 ≤ 0.8. In a plane perpendicular to the thickness direction, the area of the second concave portion 3 is D1 and the area of the thinned region 101 is D2, where 0.2 ≤ D2/D1 ≤ 0.4. In a plane perpendicular to the thickness direction, the area of the thinned region 101 is D2 and the area of the first connecting portion 10 is D3, where 0.3 ≤ D2/D3 ≤ 0.5.

### Test Example 1

A connecting component 140 with a thickness of 1 mm was used. The connecting component 140 includes a convex portion 2 formed by stamping. A circular thinned region 101 is formed on the surface of the recessed side on the convex portion 2. The thinned region 101 accounts for 30% of the area of the entire recessed side of the protrusion, and the overlap rate between the thinned region 101 and the welding region is 40%. The thinned depth of the thinned region 101 is 0.2 mm. The connecting component 140 and the electrode terminal 123 are laser welded at a welding power of 5.2 KW, where the welding track is in the form of a ring, with an outer diameter of 10 mm and an inner diameter of 9 mm.

### Test Example 2

This test example is substantially the same as Test Example 1, except that the welding power is 4.2 KW and the thinned depth of the thinned region 101 is 0.4 mm.

### Test example 3

This test example is substantially the same as Test Example 1, except that the welding power is 3.2 KW and the thinned depth of the thinned region 101 is 0.6 mm.

### Comparative Example 1

A connecting component 140 with a thickness of 1 mm was used. The connecting component 140 includes a convex portion 2 formed by stamping. The connecting component 140 and the electrode terminal 123 are laser welded at a welding power of 5.2 KW, where the welding track is in the form of a ring, with an outer diameter of 10 mm and an inner diameter of 9 mm.

### Comparative Example 2

This test example is substantially the same as Comparative Example 1, except that the welding power is 4.2 KW.

### Comparative Example 3

This test example is substantially the same as Comparative Example 1, except that the welding power is 3.2 KW.

Test method: The finished welded workpiece was fixed on the base of the tensile testing machine, with the welding surface facing upwards. The upper gripper was lowered to the specified position, and the connecting component was fixed to the gripper. The tensile testing machine was started to move the upper gripper upwards at a constant speed until the connecting component was separated from the convex portion. The tensile force value was recorded, and data of Test Examples 1 to 3 and Comparative Examples 1 to 3 was collected, as listed in the table below.

| Number | Tensile force (N) |
|---|---|
| Test Example 1 | 612 |
| Test Example 2 | 462 |
| Test Example 3 | 335 |
| Comparative Example 1 | 524 |
| Comparative Example 2 | 328 |
| Comparative Example 3 | 159 |

As can be seen from the above table, under the same welding power, the tolerable tensile force between the connecting component 140 without the thinned region 101 and the electrode terminal 123 is much lower than that between the connecting component 140 with the thinned region 101 and the electrode terminal 123. The applicant believes that provision of the thinned region 101 allows for a greater depth of fusion under the same welding power, resulting in a greater connection strength between the connecting component 140 and the electrode terminal 123.

Compared with the prior art, in the battery cell, battery, and electric apparatus according to the embodiments of this application, the thinned region 101 is provided so that the thickness at the thinned region 101 is reduced. This allows for a greater depth of fusion at the thinned region 101 after the connecting component 140 is welded to the electrode terminal 123, achieving a more stable connection between the connecting component 140 and the electrode terminal 123, and preventing the connecting component 140 from separating from the electrode terminal 123. The greater depth of fusion at the thinned region 101 can also reduce the problem of incomplete welds between the connecting component 140 and the electrode terminal 123, preventing an increase in contact resistance between the connecting component 140 and the electrode terminal 123 caused by incomplete welds. This in turn improves the consistency of the battery cell during the charging and discharging processes, improves the energy density and cycle life of the battery cell, and enhances the use safety of the battery cell.

Although this application has been described with reference to the preferred embodiments, various modifications can be made. In particular, as long as there is no structural conflict, the various technical features mentioned in some embodiments can be combined in any manner. This invention is defined by the appended claims.

## Claims

1. A battery cell, comprising:
a housing (120);
an electrode terminal (123) provided on the housing (120);
an electrode assembly (130) accommodated in the housing (120); and
a connecting component (140) configured to connect the electrode terminal (123) and the electrode assembly (130), wherein the connecting component (140) comprises a first connecting portion (10) for connecting the electrode terminal (123), wherein the first connecting portion (10) comprises a main body region (102) and a thinned region (101), the thinned region (101) having a smaller thickness than the main body region (102), and at least part of the thinned region (101) being used for welding to the electrode terminal (123).

2. The battery cell according to claim 1, wherein at least part of the thinned region (101) is used for welding to the electrode terminal (123) and forming a first welding portion (103), and at least part of the main body region (102) is used for welding to the electrode terminal (123) and forming a second welding portion (104).

3. The battery cell according to claim 2, wherein the first welding portion (103) and the second welding portion (104) are connected as one entity.

4. The battery cell according to claim 1 or 2, wherein the first connecting portion (10) is laser welded to the electrode terminal (123).

5. The battery cell according to any one of claims 1 to 4, wherein the connecting component (140) is further provided with a first concave portion (1), wherein the first concave portion (1) is recessed from a surface of the connecting component (140) away from the electrode terminal (123), and the thinned region (101) corresponds to a bottom surface of the first concave portion (1).

6. The battery cell according to claim 5, wherein the connecting component (140) is further provided with a second connecting portion (20), a convex portion (2), and a second concave portion (3), wherein
the second connecting portion (20) is configured to connect the electrode assembly (130);
the convex portion (2) protrudes from a surface of the connecting component (140) towards the electrode terminal (123); and
a position of the second concave portion (3) corresponds to the convex portion (2) in a thickness direction of the connecting component (140), and the second concave portion (3) is recessed from the surface of the connecting component (140) away from the electrode terminal (123) and extends into the convex portion (2).

7. The battery cell according to claim 6, wherein a bottom surface of the second concave portion (3) corresponding to the convex portion (2) comprises the first connecting portion (10).

8. The battery cell according to claim 6 or 7, wherein thickness of the connecting component (140) is L1 and depth of the first concave portion (1) is L2, satisfying 0 < L2/L1 ≤ 0.8.

9. The battery cell according to any one of claims 6 to 8, wherein in a plane perpendicular to the thickness direction, the area of the second concave portion (3) is D1 and the area of the thinned region (101) is D2, wherein 0.2 ≤ D2/D1 ≤ 0.4.

10. The battery cell according to any one of claims 6 to 9, wherein in a plane perpendicular to the thickness direction, the area of the thinned region (101) is D2 and the area of the first connecting portion (10) is D3, wherein 0.3 ≤ D2/D3 ≤ 0.5.

11. The battery cell according to claim 9 or 10, wherein in a plane perpendicular to the thickness direction, the thinned region (101) is circular.

12. A battery (100), comprising the battery cell according to any one of claims 1 to 11.

13. An electric apparatus, comprising the battery cell according to any one of claims 1 to 11 for supplying electrical energy.

## Patentansprüche

1. Batteriezelle, umfassend:
ein Gehäuse (120);
einen Elektrodenanschluss (123), der an dem Gehäuse (120) bereitgestellt ist;
eine Elektrodenbaugruppe (130), die in dem Gehäuse (120) aufgenommen ist; und
eine Verbindungskomponente (140), die konfiguriert ist, um den Elektrodenanschluss (123) und die Elektrodenbaugruppe (130) zu verbinden, wobei die Verbindungskomponente (140) einen ersten Verbindungsabschnitt (10) zum Verbinden des Elektrodenanschlusses (123) umfasst, wobei der erste Verbindungsabschnitt (10) eine Hauptkörperregion (102) und eine verdünnte Region (101) umfasst, wobei die verdünnte Region (101) eine geringere Dicke als die Hauptkörperregion (102) aufweist und mindestens ein Teil der verdünnten Region (101) zum Verschweißen mit dem Elektrodenanschluss (123) verwendet wird.

2. Batteriezelle nach Anspruch 1, wobei mindestens ein Teil der verdünnten Region (101) zum Verschweißen mit dem Elektrodenanschluss (123) und zum Bilden eines ersten Schweißabschnitts (103) verwendet wird und mindestens ein Teil der Hauptkörperregion (102) zum Verschweißen mit dem Elektrodenanschluss (123) und zum Bilden eines zweiten Schweißabschnitts (104) verwendet wird.

3. Batteriezelle nach Anspruch 2, wobei der erste Schweißabschnitt (103) und der zweite Schweißabschnitt (104) als eine Einheit verbunden sind.

4. Batteriezelle nach Anspruch 1 oder 2, wobei der erste Verbindungsabschnitt (10) mit dem Elektrodenanschluss (123) lasergeschweißt ist.

5. Batteriezelle nach einem der Ansprüche 1 bis 4, wobei die Verbindungskomponente (140) ferner mit einem ersten konkaven Abschnitt (1) versehen ist, wobei der erste konkave Abschnitt (1) von einer Oberfläche der Verbindungskomponente (140) entfernt vom Elektrodenanschluss (123) ausgespart ist, und die verdünnte Region (101) einer unteren Oberfläche des ersten konkaven Abschnitts (1) entspricht.

6. Batteriezelle nach Anspruch 5, wobei die Verbindungskomponente (140) ferner mit einem zweiten Verbindungsabschnitt (20), einem konvexen Abschnitt (2) und einem zweiten konkaven Abschnitt (3) versehen ist, wobei
der zweite Verbindungsabschnitt (20) konfiguriert ist, um die Elektrodenbaugruppe (130) zu verbinden;
der konvexe Abschnitt (2) von einer Oberfläche der Verbindungskomponente (140) in Richtung des Elektrodenanschlusses (123) vorsteht; und
eine Position des zweiten konkaven Abschnitts (3) dem konvexen Abschnitt (2) in einer Dickenrichtung der Verbindungskomponente (140) entspricht, und der zweite konkave Abschnitt (3) von der Oberfläche der Verbindungskomponente (140) entfernt vom Elektrodenanschluss (123) ausgespart ist und sich in den konvexen Abschnitt (2) erstreckt.

7. Batteriezelle nach Anspruch 6, wobei eine untere Oberfläche des zweiten konkaven Abschnitts (3), der dem konvexen Abschnitt (2) entspricht, den ersten Verbindungsabschnitt (10) umfasst.

8. Batteriezelle nach Anspruch 6 oder 7, wobei die Dicke der Verbindungskomponente (140) L1 und die Tiefe des ersten konkaven Abschnitts (1) L2 ist, wobei 0 < L2/L1 ≤ 0,8 erfüllt ist.

9. Batteriezelle nach einem der Ansprüche 6 bis 8, wobei in einer Ebene senkrecht zur Dickenrichtung der Bereich des zweiten konkaven Abschnitts (3) D1 und der Bereich der verdünnten Region (101) D2 ist, wobei Folgendes gilt: 0,2 ≤ D2/D1 ≤ 0,4.

10. Batteriezelle nach einem der Ansprüche 6 bis 9, wobei in einer Ebene senkrecht zur Dickenrichtung der Bereich der verdünnten Region (101) D2 und der Bereich des ersten Verbindungsabschnitts (10) D3 ist, wobei Folgendes gilt: 0,3 ≤ D2/D3 ≤ 0,5.

11. Batteriezelle nach Anspruch 9 oder 10, wobei in einer Ebene senkrecht zur Dickenrichtung die verdünnte Region (101) kreisförmig ist.

12. Batterie (100), umfassend die Batteriezelle nach einem der Ansprüche 1 bis 11.

13. Elektrische Einrichtung, umfassend die Batteriezelle nach einem der Ansprüche 1 bis 11 zum Liefern von elektrischer Energie.

## Revendications

1. Élément de batterie, comprenant :
un logement (120) ;
une borne d'électrode (123) disposée sur le logement (120) ;
un ensemble électrode (130) reçu dans le logement (120) ; et
un composant de connexion (140) configuré pour connecter la borne d'électrode (123) et l'ensemble électrode (130), dans lequel le composant de connexion (140) comprend une première partie de connexion (10) permettant de connecter la borne d'électrode (123), dans lequel la première partie de connexion (10) comprend une région de corps principal (102) et une région amincie (101), la région amincie (101) présentant une épaisseur inférieure à celle de la région de corps principal (102), et au moins une partie de la région amincie (101) étant utilisée pour le soudage à la borne d'électrode (123).

2. Élément de batterie selon la revendication 1, dans lequel au moins une partie de la région amincie (101) est utilisée pour le soudage à la borne d'électrode (123) et la formation d'une première partie de soudage (103), et au moins une partie de la région de corps principal (102) est utilisée pour le soudage à la borne d'électrode (123) et la formation d'une seconde partie de soudage (104).

3. Élément de batterie selon la revendication 2, dans lequel la première partie de soudage (103) et la seconde partie de soudage (104) sont connectées en tant qu'entité unique.

4. Élément de batterie selon la revendication 1 ou 2, dans lequel la première partie de connexion (10) est soudée par laser à la borne d'électrode (123).

5. Élément de batterie selon l'une quelconque des revendications 1 à 4, dans lequel le composant de connexion (140) est en outre doté d'une première partie concave (1), dans lequel la première partie concave (1) est évidée à partir d'une surface du composant de connexion (140) à distance de la borne d'électrode (123), et la région amincie (101) correspond à une surface inférieure de la première partie concave (1).

6. Élément de batterie selon la revendication 5, dans lequel le composant de connexion (140) est en outre doté d'une seconde partie de connexion (20), d'une partie convexe (2), et d'une seconde partie concave (3), dans lequel
la seconde partie de connexion (20) est configurée pour connecter l'ensemble électrode (130) ;
la partie convexe (2) fait saillie à partir d'une surface du composant de connexion (140) en direction de la borne d'électrode (123) ; et
une position de la seconde partie concave (3) correspond à la partie convexe (2) dans une direction d'épaisseur du composant de connexion (140), et la seconde partie concave (3) est évidée à partir de la surface du composant de connexion (140) à distance de la borne d'électrode (123) et s'étend dans la partie convexe (2).

7. Élément de batterie selon la revendication 6, dans lequel une surface inférieure de la seconde partie concave (3) correspondant à la partie convexe (2) comprend la première partie de connexion (10).

8. Élément de batterie selon la revendication 6 ou 7, dans lequel l'épaisseur du composant de connexion (140) est L1 et la profondeur de la première partie concave (1) est L2, satisfaisant 0 < L2/L1 ≤ 0,8.

9. Élément de batterie selon l'une quelconque des revendications 6 à 8, dans lequel dans un plan perpendiculaire à la direction d'épaisseur, la zone de la seconde partie concave (3) est D1 et la zone de la région amincie (101) est D2, dans lequel 0,2 ≤ D2/D1 ≤ 0,4.

10. Élément de batterie selon l'une quelconque des revendications 6 à 9, dans lequel dans un plan perpendiculaire à la direction d'épaisseur, la zone de la région amincie (101) est D2 et la zone de la première partie de connexion (10) est D3, dans lequel 0,3 ≤ D2/D3 ≤ 0,5.

11. Élément de batterie selon la revendication 9 ou 10, dans lequel dans un plan perpendiculaire à la direction d'épaisseur, la région amincie (101) est circulaire.

12. Batterie (100), comprenant l'élément de batterie selon l'une quelconque des revendications 1 à 11.

13. Appareil électrique, comprenant l'élément de batterie selon l'une quelconque des revendications 1 à 11 pour fournir une énergie électrique.
